# EUROPEAN PATENT APPLICATION

(11) **EP 2 434 445 A1**
(43) Date of publication of application: **28.03.2012**
(21) Application number: 11164976.0
(22) Date of filing: 05.05.2011
(51) Int. Cl.: G06Q 30/00

(54) **Display apparatus and commercial display method of the same**

(30) Priority: 15.09.2010 KR 20100090408
(71) Applicant: SAMSUNG ELECTRONICS CO., LTD., Suwon-si Gyeonggi-do 442-742 (KR)
(72) Inventor: Hyun, Dae-eun, Gyeonggi-do (KR)
(74) Representative: Robinson, Ian Michael

(57) **Abstract**

A display apparatus and a commercial display method of the same are provided. The display apparatus includes a display unit which displays at least one commercial image on a certain area; and a commercial executing unit which executes a function related to a selected commercial image if a selection signal for selecting one among the commercial images is received.

## Description

### BACKGROUND

### 1. Field

Apparatuses and methods consistent with the exemplary embodiments relate to a display apparatus and a commercial display method of the same, and more particularly, to a display apparatus capable of displaying point of purchase (POP) advertisement and a commercial display method of the same.

### 2. Description of the Related Art

Advertisements are generally intended to provide information about goods or service through various media, such as wired or wireless television (TV), radio, and paper media such as newspaper and magazines.

In a particular case in which an advertisement describes a display apparatus, point of purchase (POP) advertisement has been made in the form of a sticker attached to the display device, which informs the customer about specifications of the display apparatus such as manufacturer or brand information, screen size information, resolution information, etc. POP advertisements have also been made to be installed outside of a store selling the product that is the subject of the advertisement.

According to the present invention there is provided an apparatus and method as set forth in the appended claims. Other features of the invention will be apparent from the dependent claims, and the description which follows.

### SUMMARY

According to an aspect of one or more exemplary embodiments, there is provided a display apparatus and a commercial display method of the same, which can increase practical use of a commercial image in POP advertising.

According to another aspect of an exemplary embodiment, there is provided a display apparatus and a commercial display method of the same, which can display detailed information of a commercial image.

According to still another aspect of an exemplary embodiment, there is provided a display apparatus and a commercial display method of the same, which can easily execute an optional function.

According to yet another aspect of an exemplary embodiment, there is provided a display apparatus and a commercial display method, which can use a server to maximize an advertising effect of a commercial image.

According to one or more exemplary embodiments, there is provided a display apparatus including: a display unit which displays at least one commercial image on a certain area; and a commercial executing unit which executes a function related to a selected commercial image if a selection signal for selecting one among the commercial images is received.

If the commercial image shows a certain optional function of the display apparatus, the commercial executing unit may execute the optional function.

The commercial executing unit may bookmark and store the selected commercial image.

The commercial executing unit may display detailed information about the commercial image on the display unit.

The display apparatus may further include a communication unit which receives the detailed information from a predetermined server.

If the commercial image is an advertisement for a purchasable product, the commercial executing unit may display a purchase interface through which the contents can be purchased.

The display apparatus may further include a communication unit to communicate with a predetermined server capable of providing the purchase interface, wherein the commercial executing unit controls the communication unit to communicate with the server if the commercial image is selected.

The display apparatus may further include a communication unit which receives the commercial image from a predetermined server; and an on screen display (OSD) generating unit which generates the commercial image in the form of OSD.

The commercial executing unit may control the communication unit to transmit at least one of a device identifier (ID), a commercial ID, and commercial image selection times to the server.

According to one or more exemplary embodiments, there is provided a commercial display method of a display apparatus, the method including: displaying at least one commercial image on a certain area; and receiving a selection signal for selecting one among the commercial images; and executing a function related to a selected commercial image.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIG. 2 illustrates a commercial image on a display apparatus according to an exemplary embodiment;
FIG. 3 illustrates detailed information of a commercial image on a display apparatus according to an exemplary embodiment;
FIG. 4 illustrates an application window for explaining an optional function of a commercial image on a display apparatus according to an exemplary embodiment;
FIG. 5 is a control flowchart for explaining a commercial image executing method of a display apparatus according to an exemplary embodiment;
FIG. 6 is a control block diagram of a display apparatus according to another exemplary embodiment;
FIG. 7 illustrates a purchase interface for purchasing contents through advertisement on a display apparatus according to another exemplary embodiment; and
FIG. 8 is a control flowchart for explaining a commercial image executing method of a display apparatus according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

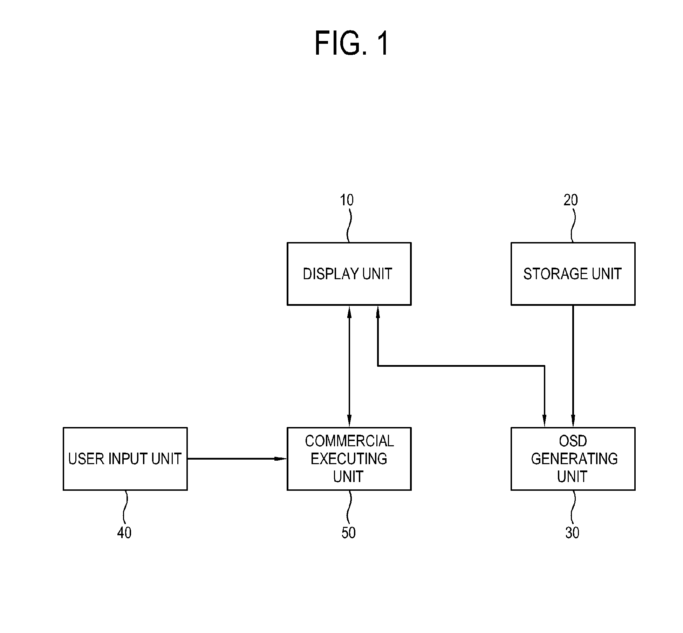

FIG. 1 is a control block diagram of a display apparatus according to an exemplary embodiment.

As shown therein, a display apparatus includes a display unit 10, a storage unit 20, an on screen display (OSD) generating unit 30, a user input unit 40, and a commercial executing unit 50. According to this exemplary embodiment, the display apparatus may be realized as an Internet protocol television (IPTV) which can receive service through the Internet, and may include a computer system having a display unit, a notebook computer, and various audiovisual (AV) devices. Also, the display apparatus may include a Netbook, various mobile terminals, E-book, etc. Further, the display apparatus may be achieved by a large format display (LFD) or a table top display.

The display unit 10 displays a video signal that contains a commercial image. The display unit 10 may be achieved by a liquid crystal display (LCD), an organic light emitting display (OLED), a plasma display panel (PDP), etc.

The storage unit 20 stores various application programs and data needed for driving the display apparatus. In particular, the storage unit 20 stores data about specifications of the display apparatus, such as manufacturer or brand information, screen size (inch) information, resolution information, etc., that may be used in the form of a commercial image for point of purchase (POP) advertisement. Such a commercial image may include an advertisement for a function of the display apparatus, other contents related to the display apparatus, or an advertisement for an application or the like in addition to the data about the specifications of the display apparatus. A commercial image I may be a still image such as a thumbnail, or a moving picture such as a flash animation. Also, the commercial image I may include an audio effect. The storage unit 20 may be provided as an internal or external flash memory, and merged into the commercial executing unit 50 or the OSD generating unit 30. The commercial image stored in the storage unit 20 can be updated and may be deleted by a user.

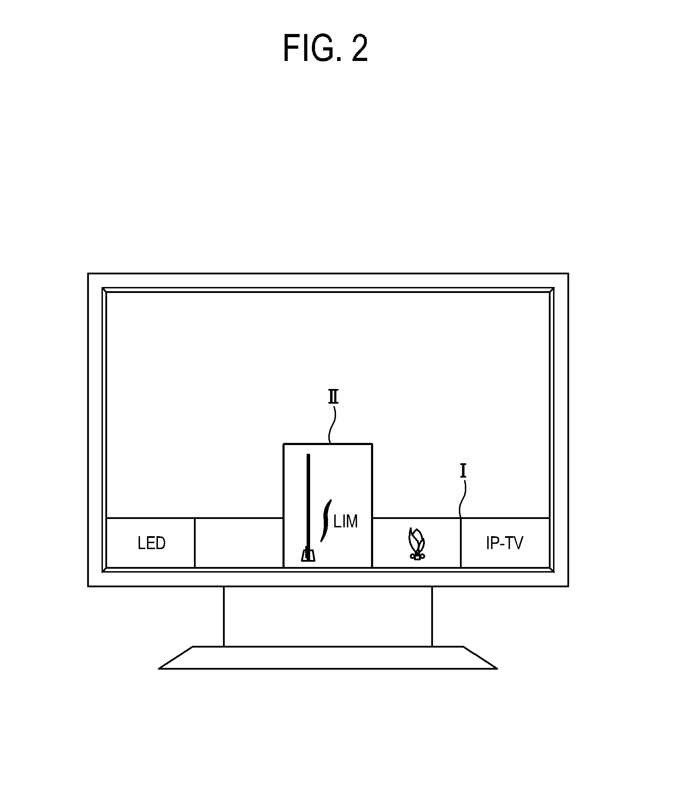

The OSD generating unit 30 corresponds to a graphic user interface (GUI) generator, which displays an OSD window on the display unit 10 and regulates brightness, contrast, synchronization, RGB control, horizontal and vertical sizes of a screen, a position of the screen, etc. of the display unit 10 on the basis of setup information if a user selects a setup menu formed within the OSD window displayed on the display unit 10. In this exemplary embodiment, the OSD generating unit 30 displays the OSD containing the commercial image to be overlapped with a displayed image. FIG. 2 illustrates a commercial image on a display apparatus according to an exemplary embodiment. As shown therein, the commercial image I includes a plurality of commercial items II. Such a commercial item II becomes enlarged or highlighted when selected by a user. A user may search or select the commercial item II through the user input unit 40.

The user input unit 40 corresponds to a user interface for selecting the commercial items II displayed on the display unit 10, which may include a touch sensor or a key button for moving a pointer, a highlight or the like displayed on the display unit 10. The user input unit 40 may include a button or touch sensor provided in a housing of the display apparatus, or may be provided as a remote controller having a key pad and a touch pad. A user may select a commercial mode for displaying the commercial image through the user input unit 40, and the commercial executing unit 50 controls the storage unit 20 and the OSD generating unit 30 to display the commercial image I on the display unit 10 when the commercial mode is selected.

As shown in FIG. 2, the commercial image I may be horizontally displayed on an upper or lower side of the display unit 10, or vertically displayed on a left or right side of the display unit 10. Also, in order to minimize a part to be overlapped with a main image displayed on the display unit 10, one commercial item II is displayed and then other commercial items may be displayed in sequence.

When a signal for selecting one of the commercial images I is received, the commercial executing unit 50 executes a function related to the selected commercial image, i.e., the commercial item II. The execution of the function related to the commercial item II may include displaying detailed information on the commercial item II or bookmarking and storing the selected commercial item II. Thus, a user can easily search and execute the bookmarked commercial image I. Such a bookmark may be used differently by different users. That is, the storage unit 20 may store the bookmarked commercial images I according to a particular user's preference. If the commercial image I shows a certain optional function of the display apparatus, the execution of the function of the commercial image I may include executing the optional function. For example, the optional function may include access to a network such as a web in the IPTV, play of a multimedia file stored in the internal memory of the display device, or stored in external memory, and access to a certain web site, e.g., a social network service (SNS) such as Twitter or Facebook. Additionally, if the commercial image I is an advertisement for a purchasable product, the commercial executing unit 50 may display a purchase interface through which contents can be purchased. Data for executing the commercial image I may be stored in the storage unit 20 or received from an external source.

According to an exemplary embodiment, not only may the commercial image I be displayed in the form of OSD, but also the function related to the commercial image I is executed, thereby enhancing the practical use of the commercial image I and improving the corresponding advertising effect.

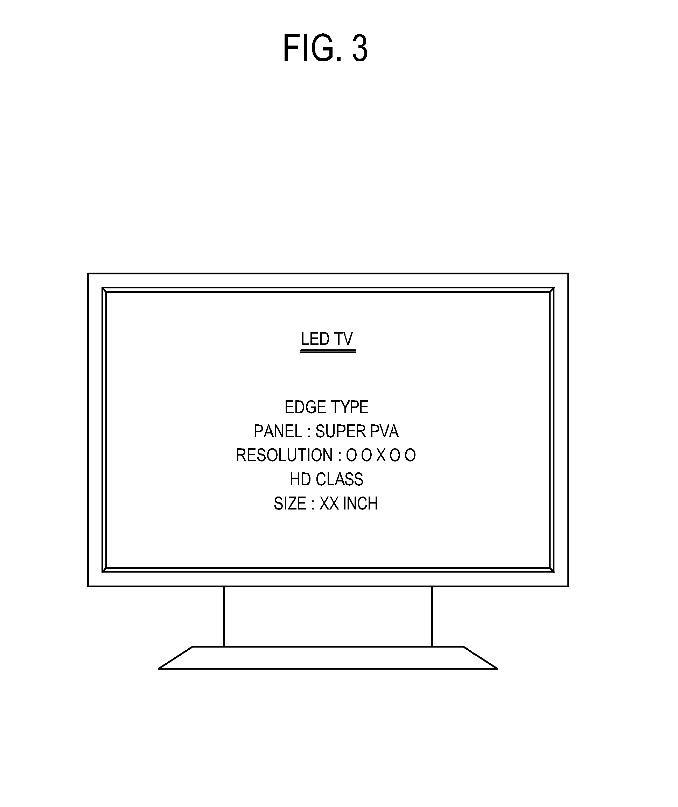

FIG. 3 illustrates detailed information of a commercial image on a display apparatus according to an exemplary embodiment. FIG. 3 illustrates data about the specifications of the display apparatus. The commercial item II includes a thumbnail "LED TV" as a representative feature of the display apparatus, and if a user selects this commercial item, description about the current display apparatus is displayed on the display unit 10. As shown therein, if the commercial item is executed, information that the display apparatus employs a light emitting diode (LED) as a light source, information that the LED is an edge type where the LED is placed near an edge of an LCD panel (not shown), and information about the size of the panel, the resolution, etc. are provided to a user. Such detailed information may be stored in the storage unit 20, or received from an external source. Also, the detailed information may be achieved by a still image, or by a moving picture for explaining the commercial image I in detail and enhancing a user's recognition of the advertised product.

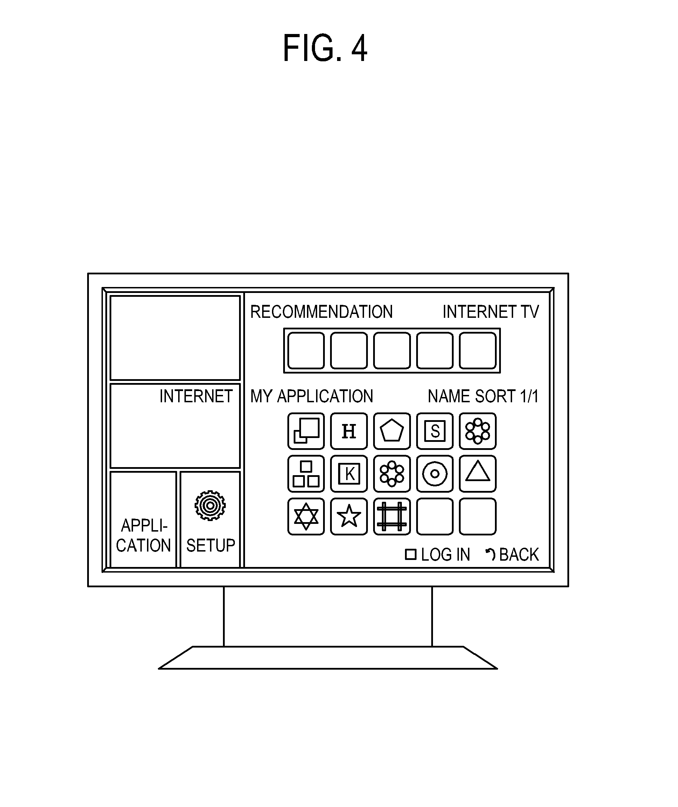

FIG. 4 illustrates an application window for explaining an optional function of a commercial image on a display apparatus according to an exemplary embodiment. With regard to any optional function, if the commercial item II about the optional function is selected, the commercial executing unit 50 may display an application window for executing a plurality of applications, i.e., widgets. Also, the commercial executing unit 50 may execute the optional function selected by a user. For example, if the commercial item II is related to video on demand (VOD), the commercial executing unit 50 may display a window related to the VOD on the display unit 10. The window related to the VOD may contain information about the newest contents, information about recommended contents, items for executing the contents, etc. If the optional function executable in the display apparatus is an electronic frame function, the commercial executing unit 50 may directly execute the electronic frame function, or display an interface window for selecting an image to be displayed.

As the optional function is included in the commercial image I, a user can more easily access the functions of the display apparatus and therefore the practical use of the optional function can be increased.

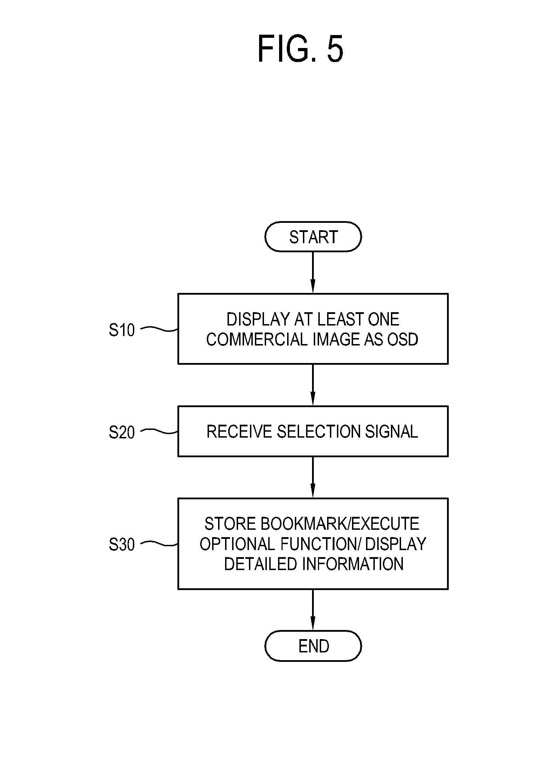

FIG. 5 is a control flowchart for explaining a commercial image executing method of a display apparatus according to an exemplary embodiment. Referring to FIG. 5, a control method in this exemplary embodiment is performed as follows.

First, the OSD generating unit 30 generates at least one commercial image I as an OSD and displays it on a certain area of the display unit 10 (S10).

Then, a selection signal for selecting one of the commercial images I is received from the user input unit 40 (S20).

The commercial executing unit 50 performs a function related to the selected commercial image, i.e., the commercial item II (S30). If the commercial image I shows a certain optional function of the display apparatus, such a function may include executing the optional function, bookmarking and storing the commercial image, displaying detailed information about the commercial image I on the display unit 10, etc.

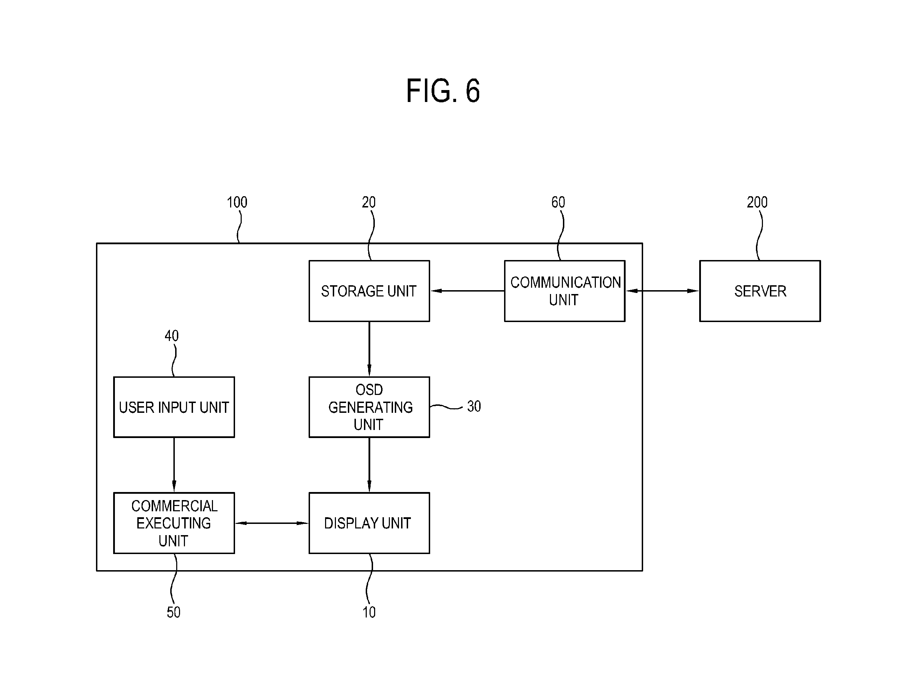

FIG. 6 is a control block diagram of a display apparatus according to another exemplary embodiment. The display apparatus 100 may further include a communication unit 60 to communicate with an external server 200. The display apparatus 100 may communicate with the server 200 through a network, and the network may include a local area network (LAN) or Internet. Accordingly, the communication unit 60 may be variously achieved by a LAN card, a modem, etc. The communication unit 60 and the server 200 may transmit and receive data transmission packets. Through the data transmission packet, it is possible to determined data transmission speed, a connection state, etc. The communication unit 60 may use various communication protocols such as transmission control protocol/Internet protocol (TCP/IP), etc. without limitation.

The server 200 may include a content provider capable of providing various data and information, and contents to the display apparatus 100. If the display apparatus 100 is an IPTV, the server 200 may include servers of various sites to which the display apparatus 100 can have access through a network.

The display apparatus 100 may receive a commercial image I to be displayed on the display unit 10, detailed information about the commercial image I, an application window for executing an optional function, an application, etc. from the server 200 through the communication unit 60. According to an exemplary embodiment, if there is a commercial image I that varies with time among the commercial images I received from the server 200, for example, a commercial image I that contains an advertisement in which a price is changed during a certain period such as a sale period, a variable commercial image I can be easily displayed on the display unit 10 by modifying a commercial image I in the server 200.

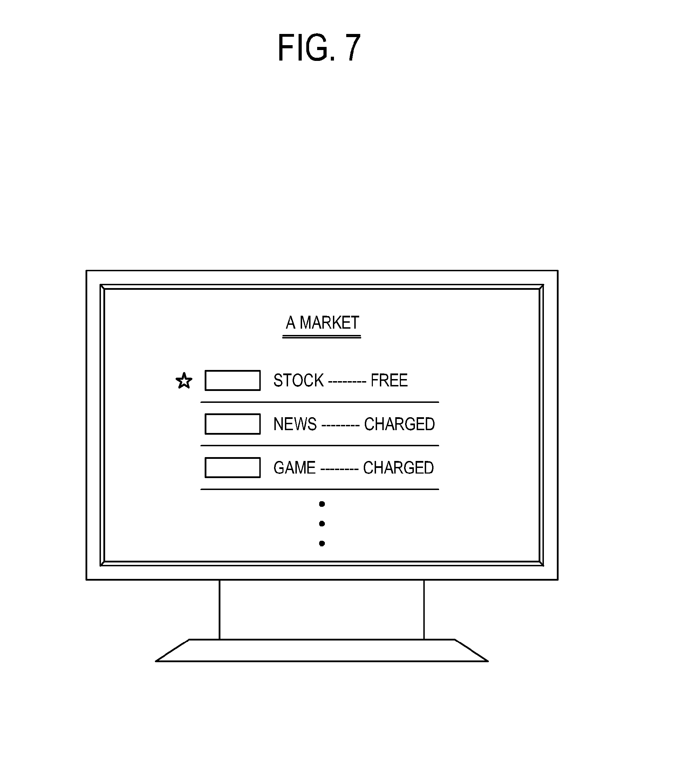

Also, if the commercial image I is an advertisement for a purchasable product, the communication unit 60 communicates with the server 200 to receive various interface windows for searching products, purchasing products, etc., and the commercial executing unit 50 displays them on the display unit 10. FIG. 7 illustrates a purchase interface for purchasing products through an advertisement on a display apparatus according to another exemplary embodiment. FIG. 7 illustrates a web-based application market, through which various applications are downloadable.

Thus, a user can access the application market through the user input unit 40 and purchase a desired application on the application market. When data communication is implemented between a user and the server 200, the commercial executing unit 50 may control the communication unit 60 to transmit at least one of a device identifier (ID), a commercial ID, and commercial image selection times to the server 200.

Accordingly, the server 200 can acquire information about a user, information about contents desired by the user, information about when the products are purchased, etc. Also, the server 200 can acquire information about which commercial item II is most selected among the commercial images I provided to the display apparatus 100. The sever 200 can profile such user information and provide contents or applications corresponding to a user's taste.

Also, the server 200 may employ the user information and the information about the commercial image I in other business-related activities.

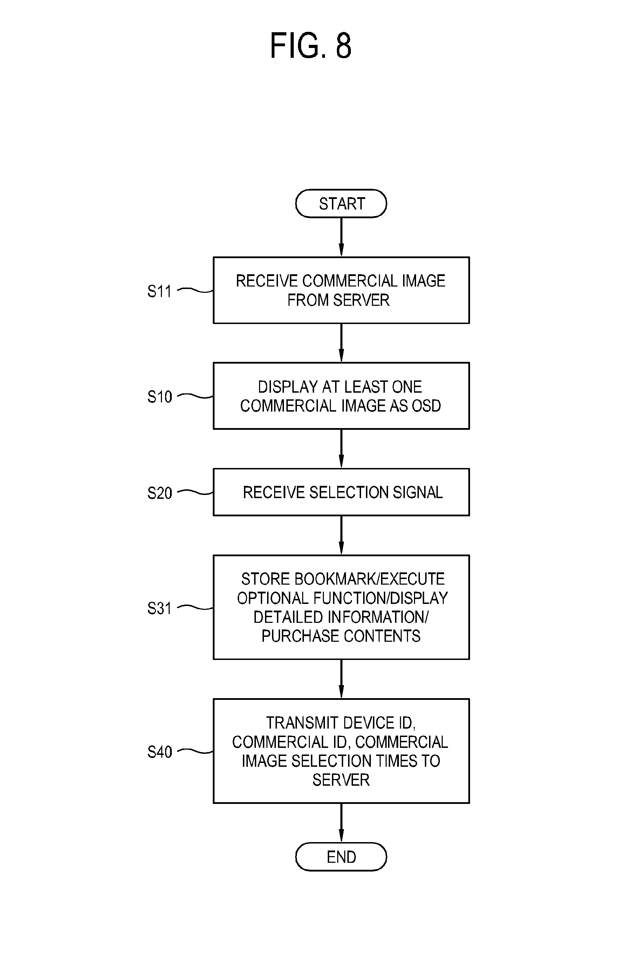

FIG. 8 is a control flowchart for explaining a commercial image executing method of a display apparatus according to another exemplary embodiment.

As shown therein, the display apparatus 100 in this exemplary embodiment also displays the commercial image (S10), receives the selection signal (S20) and executes the commercial image I (S31) like those shown in FIG. 5. The display apparatus 100 receives information about the commercial image I from the sever 200 such as a content provider, and communicates with the content provider in order to execute the commercial image I. In this case, before displaying the commercial image I, the display apparatus 100 receives the commercial image I from the server 200 (S11).

While communicating with the server 200, at least one of the device ID, the commercial ID and the commercial image selection times is transmitted to the server 200. Such information allows the server 200 to form a user profile, and is additionally used in diversifying contents, and improving service quality of the content provider.

In the foregoing exemplary embodiments, the commercial image is displayed in the form of an OSD to enhance a user's accessibility, and the function related to the commercial image displayed as the OSD is executed to thereby promote a user's experience. Accordingly, the advertising affect of the commercial image can be improved, and it is possible to establish a sale system for contents involved in the commercial image.

The above description describes several "units," which may be embodied as, but are not limited to, software or hardware components, such as Field Programmable Gate Arrays (FPGAs) or Application Specific Integrated Circuits (ASICs), etc.

The methods described in the exemplary embodiments may be embodied as instructions or a program stored on a transitory or non-transitory computer-readable medium, which when executed by a computer, causes the computer to perform the methods.

Although a few preferred embodiments have been shown and described, it will be appreciated by those skilled in the art that various changes and modifications might be made without departing from the scope of the invention, as defined in the appended claims.

## Claims

1. A display apparatus comprising:
a display unit which displays at least one commercial image; and
a commercial executing unit which executes a function related to a selected commercial image that is selected from among the at least one commercial image.

2. The display apparatus according to claim 1, wherein if the selected commercial image shows an optional function of the display apparatus, the commercial executing unit executes the optional function.

3. The display apparatus according to claim 1, wherein the commercial executing unit bookmarks and stores the selected commercial image.

4. The display apparatus according to claim 1, wherein the commercial executing unit causes the display unit to display detailed information about the selected commercial image.

5. The display apparatus according to claim 4, further comprising a communication unit which receives the detailed information from a server.

6. The display apparatus according to claim 1, wherein if the selected commercial image is an advertisement for a purchasable product, the commercial executing unit displays a purchase interface through which the product can be purchased.

7. The display apparatus according to claim 1, further comprising:
a communication unit which receives the at least one commercial image from a server; and
an on screen display (OSD) generating unit which generates the at least one commercial image in the form of an OSD.

8. The display apparatus according to claim 1, wherein the at least one commercial image is an advertisement for a purchasable product, and the commercial image changes according to a change in a price of the purchasable product.

9. A commercial display method performed by a display apparatus, the method comprising:
displaying at least one commercial image on a display unit; and
receiving a selection signal for selecting a selected commercial image among the at least one commercial image; and
executing a function related to the selected commercial image.

10. The method according to claim 11, wherein the executing the function comprises executing an optional function of the display apparatus if the selected commercial image shows the optional function.

11. The method according to claim 11, further comprising bookmarking and storing the selected commercial image.

12. The method according to claim 11, wherein the executing the function comprises displaying detailed information about the selected commercial image on the display unit.

13. The method according to claim 14, further comprising receiving the detailed information from a server.

14. The method according to claim 11, wherein the executing the function comprises displaying a purchase interface for purchasing a product if the selected commercial image is an advertisement for a purchasable product.

15. The method according to claim 11, wherein the at least one commercial image is an advertisement for a purchasable product, and the commercial image changes according to a change in a price of the purchasable product.
